# EUROPEAN PATENT SPECIFICATION

(11) **EP 1 691 998 B1**
(45) Date of publication and mention of the grant of the patent: **27.10.2010**
(21) Application number: 04774257.2
(22) Date of filing: 03.08.2004
(51) Int. Cl.: B60H 1/08

(54) **HEAT ROD ASSEMBLY AND PRE-HEATER FOR VEHICLES INCLUDING THE SAME**
WÄRMESTABANORDNUNG UND VORWÄRMER FÜR FAHRZEUGE DAMIT
ENSEMBLE A TIGE CHAUFFANTE ET PRECHAUFFEUR POUR VEHICULES COMPRENANT LEDIT ENSEMBLE

(30) Priority: 18.11.2003 KR 2003081466
(43) Date of publication of application: 23.08.2006
(73) Proprietor: Woory Industrial Company Ltd., Yongin-si, Kyonki-do 449-908 (KR)
(72) Inventor: LEE, Sung-Young, 102-408 Byucksan Apt., Yeongdeungpo-gu, Seoul 150-102 (KR)
(74) Representative: Giovannini, Francesca
(86) International application number: PCT/KR2004/001951
(87) International publication number: WO 2005/049349

(56) References cited:
- EP-A1- 0 333 906
- DE-A1- 3 042 420
- DE-A1- 10 143 852
- GB-A- 2 322 275
- JP-A- 2 053 628
- KR-A- 20010 110 621
- KR-A- 20030 047 809
- KR-Y1- 200 235 499
- US-A1- 2003 015 520

## Description

### Technical Field

The present invention relates to a heat assembly and a pre-heater for vehicles including the same, and more particularly to a heat assembly for preheating internal air of a vehicle by using heat generated from a PTC device and a pre-heater for vehicles including the same.

### Background Art

Generally, a vehicle is equipped with a heating device for heating internal air of the vehicle or for removing humidity or frost from a front window of the vehicle by using thermal energy of cooling water, which is heated by heat generated from an engine.

In such a heating device, cooling water flowing around the engine is heated by heat generated from the engine after the engine has been operated and is introduced into the heating device, so relatively long time is necessary to sufficiently heat internal air of the vehicle. For this reason, in a cold season, a driver must wait for a predetermined time in the vehicle while being exposed to the cold after starting the vehicle.

In order to solve the above problem, Korean Utility Model Registration No. 20-0144945 discloses a heating device for preheating internal air of a vehicle by using a PTC (positive temperature coefficient) device. Hereafter, a structure of the heating device disclosed in Korean Utility Model Registration No. 20-0144945 will be shortly described.

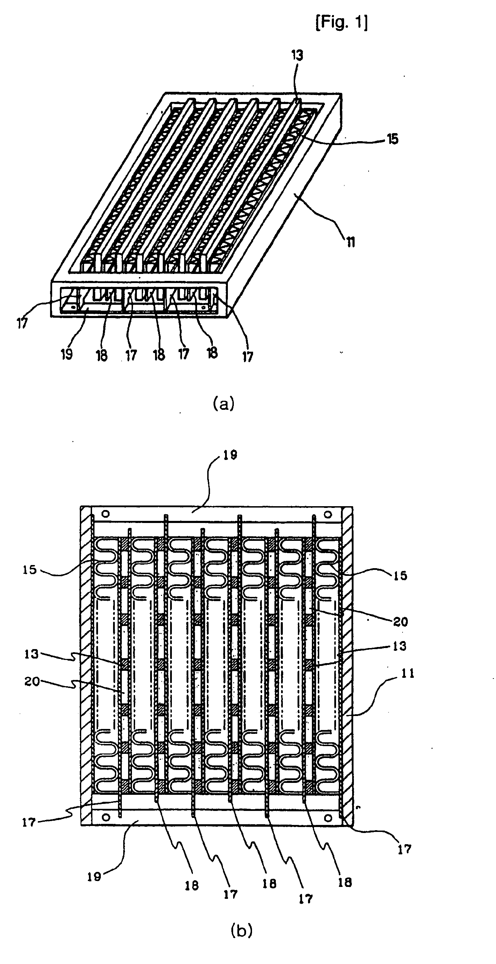

As shown in FIG. 1, the heating device for a vehicle includes a plurality of PTC devices 20, which generate heat upon receiving power from a power source. A plurality of anti-short receiving plates 13 having perforated holes for receiving the PTC devices 20 are installed in a frame 11 in parallel to each other. In addition, a plurality of heat sinks 15 are installed between the anti-short receiving plates 13 such that heat exchange is easily achieved between the anti-short receiving plates 13. First terminals of the PTC devices (for example, negative terminals) are connected to the power source, and second terminals of the PTC devices (for example, positive terminals) are connected to the power source through switches (not shown), which are individually operated.

In addition, plates 17 and 18 are aligned between the anti-short receiving plates 13 and the heat sinks 15. The anti-short receiving plates 13 have heights larger than heights of the heat sinks 15 and the plates 17 and 18 in such a manner that the PTC devices 20 are prevented from being shorted due to impurities attached thereto.

Herein, reference numeral 19 represents terminal plates, which are installed at lower front and lower rear portions the frame 11, respectively. One end of the plate 17 is connected to the terminal plate, thereby forming the negative terminal together with the frame 11. In addition, one end of the plate 18 is connected to a wire (not shown), thereby forming the positive terminal.

A heat rod assembly according to the preamble of claim 1 is described in US 2003/015520 A1.

However, the conventional heating device for the vehicle having the above construction represents a problem. That is, since components of the conventional heating device are not divided as module units, assembling work for the components of the conventional heating device is very complicated, thereby lowering productivity and workability.

### Disclosure of the Invention

Therefore, the present invention has been made in view of the above-mentioned problems, and it is an object of the present invention to provide a heat rod assembly and a pre-heater for vehicles including the same, in which components of the heat rod assembly and the pre-heater are grouped as module units so that a width and a volume of the heat rod assembly or the pre-heater can be variously formed so that the heat rod assembly or the pre-heater is adaptable for various kinds of vehicles, and assembling work for the components can be easily and simply carried out so that productivity thereof can be improved.

In order to accomplish the above object, according to one aspect of the present invention, there is provided a heat rod assembly for a pre-heater used in a vehicle, the heat rod assembly comprising : a channel type first heat rod; an insulator installed at a bottom portion of the first heat rod; a positive terminal fixedly installed on the insulator lengthwise along the insulator; a PTC device coupled to the insulator by interposing the positive terminal therebetween; and a second heat rod for covering an opening section of the first heat rod, wherein the insulator comprises a bottom recess, which extends lengthwise along the insulator in order to receive the positive terminal therein; stepped recesses formed at both sides of the bottom recess; and insertion protrusions formed in the stepped recesses, wherein a distance between the insertion protrusions is identical to a length of the PTC device (140).

According to the preferred embodiment of the present invention, an upper edge section of the first heat rod is inwardly bent such that the upper edge section covers an edge section of the second heat rod.

According to the preferred embodiment of the present invention, an inner width of the first heat rod is identical to an outer width of the insulator such that the first heat rod is securely accommodated in the insulator.

According to the preferred embodiment of the present invention, the insulator is provided at both longitudinal ends thereof with fixing protrusions, which are inserted into coupling holes formed in the positive terminal.

According to the preferred embodiment of the present invention, the PTC device is positioned on the insulator corresponding to openings formed in the insulator by interposing the positive terminal between the PTC device and the insulator.

According to another aspect of the present invention, there is provided a pre-heater for a vehicle, the pre-heater comprising: a heat rod assembly having the above construction; a heat fin assembly formed at both sides of the heat rod assembly in parallel to each other; a negative terminal aligned in parallel to the heat fin assembly; side frames coupled to both sides of a coupling structure consisting of the heat rod assembly, the heat fin assembly and the negative terminal; and housings for coupling the heat rod assembly, the heat fin assembly, the negative terminal, and the frames with each other at front and rear portions thereof.

According to the preferred embodiment of the present invention, a coupling unit is laterally provided over middle parts of the heat rod assembly, the heat fin assembly and the negative terminal in order to couple the heat rod assembly, the heat fin assembly and the negative terminal with each other.

According to the preferred embodiment of the present invention, the coupling unit includes a clip capable of coupling the heat rod assembly, the heat fin assembly and the negative terminal with the side frames.

According to the preferred embodiment of the present invention, the side frames have a channel structure, both ends of the clip are bent such that the both ends of the clip are locked with flanges formed in upper portions of the side frames, and the housings have coupling slots, respectively, for receiving end portions of the side frames.

According to the preferred embodiment of the present invention, the heat fin assembly includes a plurality of corrugate fins, which are fixedly arranged lengthwise along a fin plate.

According to the preferred embodiment of the present invention, the heat fin assembly is coupled with the side frames by interposing a fin protecting plate therebetween.

### Description of Drawings

The foregoing and other objects, features and advantages of the present invention will become more apparent from the following detailed description when taken in conjunction with the accompanying drawings in which: ,

FIG.1 illustrates a structure of a conventional pre-heater for a vehicle, in which (a) is a perspective view of the conventional pre-heater and (b) is a plan view of the conventional pre-heater;

FIG. 2 is a perspective view showing a pre-heater for a vehicle according to one embodiment of the present invention;

FIG. 3 is an exploded perspective view of a pre-heater for a vehicle according to one embodiment of the present invention;

FIG. 4 illustrates a heat rod assembly provided in a pre-heater according to the present invention, in which (a) is a perspective view of the heat rod assembly, (b) is an exploded perspective view of the heat rod assembly, and (c) is a cross-sectional view of the heat rod assembly;

FIG. 5 is a perspective view showing a positive terminal coupled with an insulator;

FIG. 6 is a perspective view showing a PTC device coupled with an insulator;

FIG. 7 illustrates a structure of a heat fin assembly shown in FIG. 3, in which (a) is a perspective view of the heat fin assembly and (b) is an exploded perspective view of the heat fin assembly;

FIG. 8 shows a perspective view of a coupling structure of a clip and a frame shown in FIG. 3, and a partially enlarged view thereof;

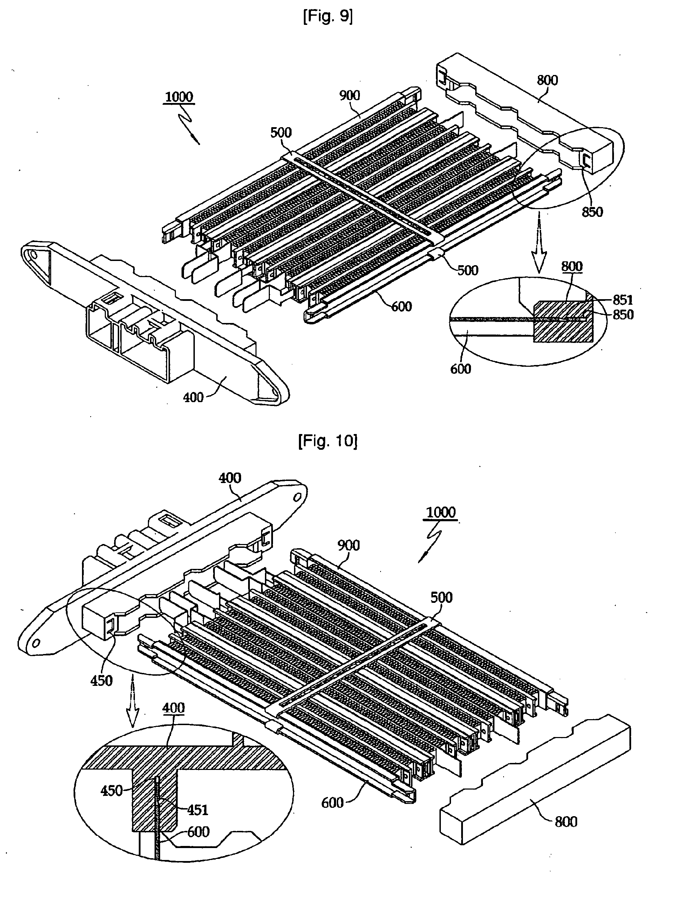

FIG. 9 shows a perspective view of a coupling structure of a rear housing shown in FIG. 3, and a partially enlarged view thereof; and

FIG. 10 shows a perspective view of a coupling structure of a front housing shown in FIG. 3, and a partially enlarged view thereof.

### Best Mode

Reference will now be made in detail to the preferred embodiments of the present invention with reference to accompanying drawings.

In the following description of the present invention, a detailed description of known functions and configurations incorporated herein will be omitted when it may make the subject matter of the present invention rather unclear.

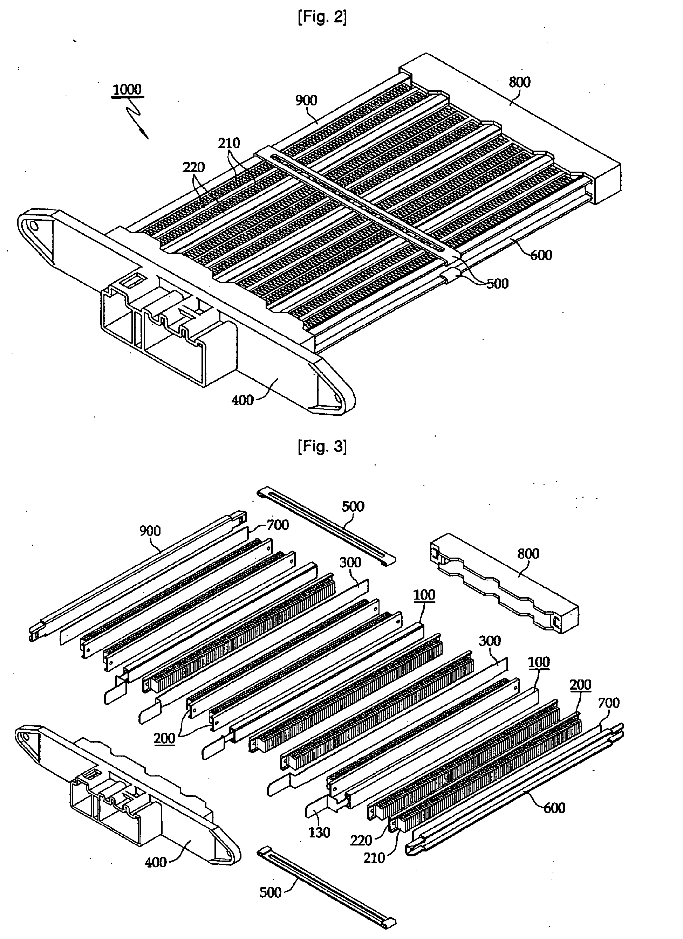

FIGS. 2 and 3 show a structure of a pre-heater 1000 for a vehicle according to one embodiment of the present invention.

As shown in FIGS. 2 and 3, the pre-heater 1000 of the present invention includes heat rod assemblies 100 including PTC devices, heat fin assemblies 200 formed at both sides of the heat rod assemblies 100 in parallel to each other, negative terminals
300 aligned in parallel to the heat fin assemblies 200, side frames 600 and 900 coupled to both sides of a coupling structure consisting of the heat rod assemblies 100, the heat fin assemblies 200 and the negative terminals 300, and housings 400 and 800 for coupling the heat rod assemblies 100, the heat fin assemblies 200, the negative terminals 300, and the frames 600 and 900 with each other at front and rear portions thereof.

Hereinafter, components of the pre-heater for the vehicle will be described in detail.

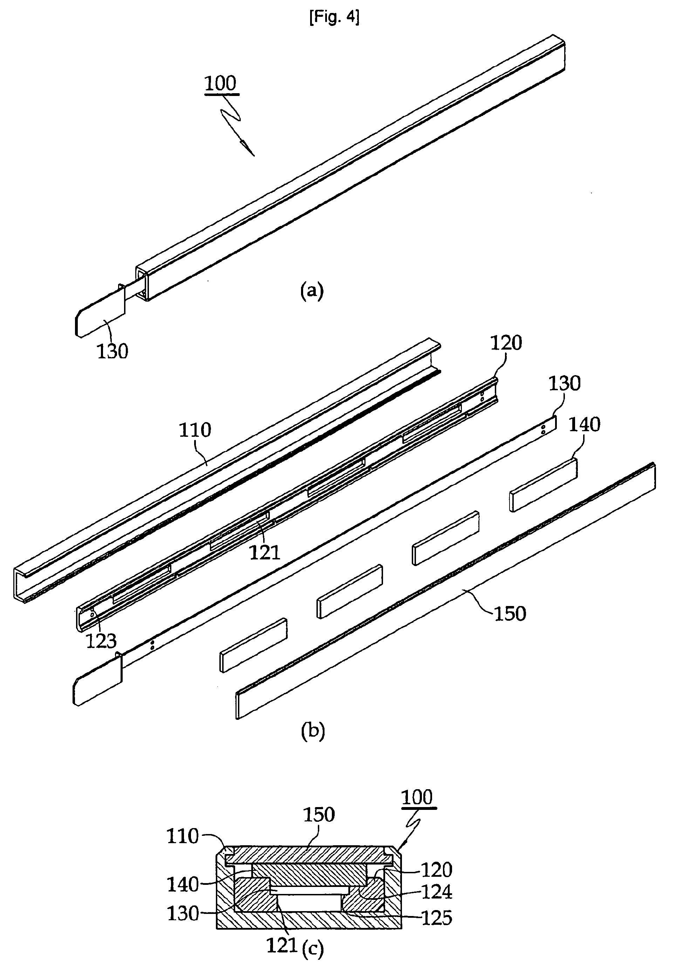

FIG. 4 shows a structure of the heat rod assembly 100.

As shown in FIG. 4, the heat rod assembly 100 includes a first heat rod 110, which is formed with a channel structure so that the first heat rod 110 acts as a receiving part.

An insulator 120 is installed at a bottom of the first heat rod 110 so as to prevent current leakage. To this end, an outer width of the insulator 120 matches with an inner width of the first heat rod 110 so that the insulator 120 is securely accommodated in the first heat rod 110. In addition, the insulator 120 includes nonconductive material, such as nylon, and material having superior thermal conductivity.

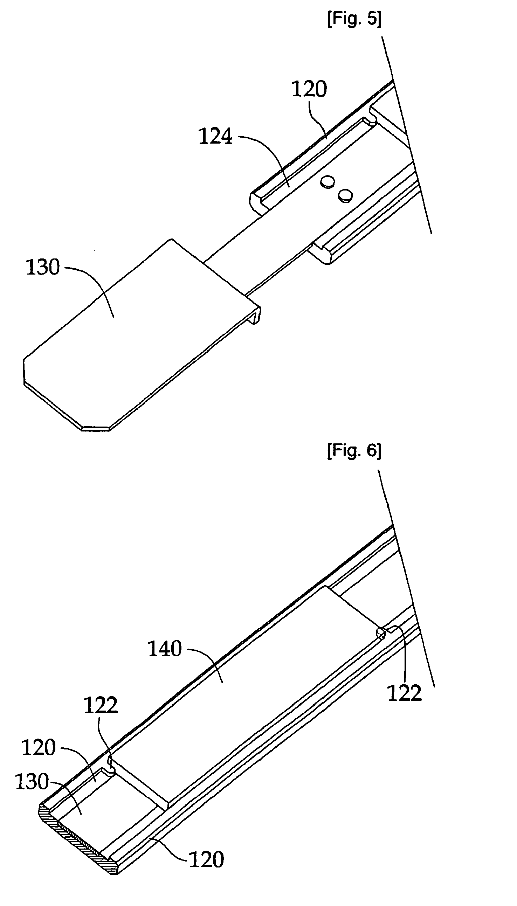

As shown in FIG. 5 in detail, a positive terminal 124 made from carbon steel is fixedly coupled with the insulator 120 lengthwise along the insulator 120. To this end, the insulator 120 is formed at a bottom thereof with a bottom recess 125 for receiving the positive terminal 130 having a relatively thin thickness. In addition, as shown in
FIG. 4, a pair of protrusions 123 is formed at both sides of the bottom recess 125 in order to securely accommodate the positive terminal 130 in the bottom recess 125.
Preferably, the positive terminal 130 is formed with coupling holes, into which the protrusions 123 are inserted. One end of the positive terminal 130 extends to an exterior so as to be connected with a power source (not shown), such as a battery.

In addition, as shown in FIGS. 4 (c) and6, the PTC device 140, which generates heat when power is applied thereto, is installed on the insulator 120 by interposing the positive terminal 130 therebetween. To this end, stepped recesses 124 are formed at both sides of the bottom recess 125 and insertion protrusions 122 can be formed at front and rear portions of the stepped recesses 124. In order to allow the PTC device 140 to be rested on the insulator 120, a distance between the insertion protrusions 122 matches with a length of the PTC device 140. Preferably, the insertion protrusions 122 are slantingly formed. In addition, it is also possible to provide the insertion protrusions 122 corresponding to four edges of the insulator 120.

The insulator 120 is formed at a bottom thereof with a plurality of openings 121 such that heat generated from the PTC device 140 can be easily transferred to the exterior. Preferably, the PTC device 140 is installed corresponding to the openings 121 of the insulator 120.

An opening section of the first heat rod 110 is closed by means of a second heat rod 150. In order to fabricate the heat rod assembly 100 as one module, it is necessary to securely couple the second heat rod 150 with the first heat rod 110. Thus, as shown in FIG. 4 (c), a protrusion is formed at an inner upper portion of a flange of the first heat rod 110. After placing the second heat rod 150 on the protrusion, an upper end of the flange is bent through a swaging process so that the heat rod assembly 100 is fabricated as one module.

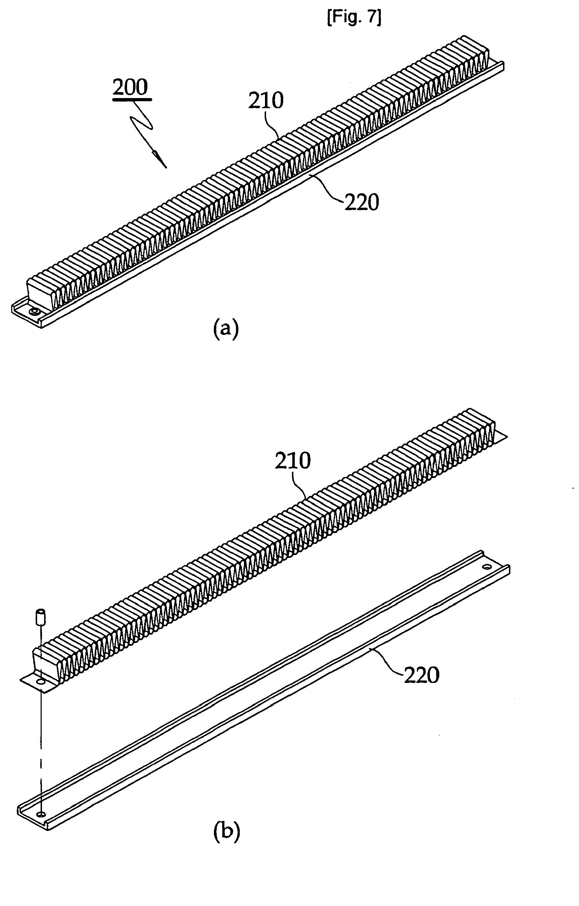

In addition, as shown in FIG. 7, the heat fin assembly 200 includes a plurality of corrugate fins 210, which are fixedly arranged lengthwise along a fin plate 220. The corrugate fins 210 and the fin plate 220 are made from material having light weight and superior thermal conductivity, such as aluminum.

Meanwhile, although the heat rod assembly 100, the heat fin assembly 200, and the negative terminal 300 are coupled to each other by means of housings 400 and 800 provided at front and rear portions thereof, it is preferred to additionally provide a coupling unit 500 over the middle parts of the heat rod assembly 100, the heat fin assembly 200 and the negative terminal 300 in order to reinforce coupling force among the heat rod assembly 100, the heat fin assembly 200 and the negative terminal 300.
As shown in FIG. 3, the coupling unit 500 includes a clip capable of coupling the heat rod assembly 100, the heat fin assembly 200 and the negative terminal 300 with the side frames 600 and 900.

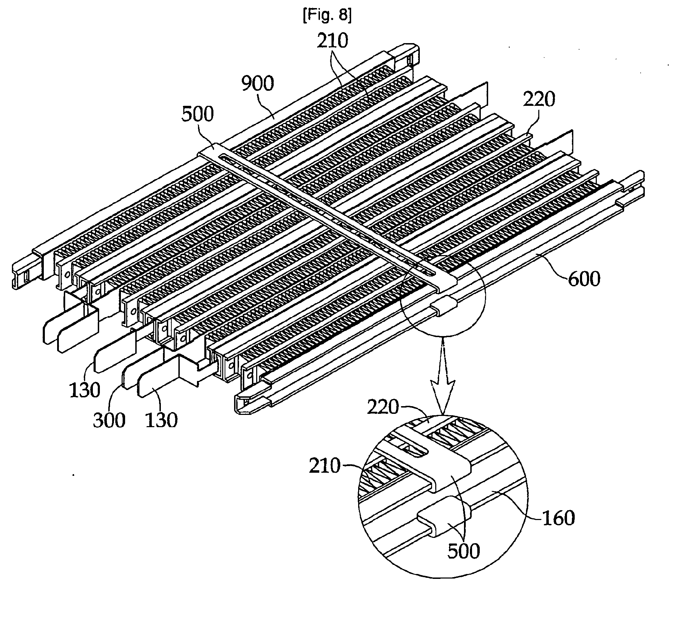

In detail, as shown in FIG. 8, the side frames 600 and 900 have a channel structure, and both ends of the clip are bent such that the both ends of the clip are locked with flanges formed in upper portions of the side frames 600 and 900.

In addition, the housings 400 and 800 have coupling slots 450 and 850, respectively, so as to receive end portions of the side frames 600 and 900. Coupling protrusions 451 and 851 are formed in the coupling slots 450 and 850.

The heat fin assembly 200 is coupled with the side frame 600 by interposing a fin protecting plate 700 made from SUS between the heat fin assembly 200 and the side frame 600 in such a manner that fins are prevented from being deformed when assembling the heat fin assembly 200 or when using the heat fin assembly 200.

### Industrial Applicability

As can be seen from the foregoing, according to the present invention, components of the pre-heater, such as the heat rod assembly or the heat fin assembly, can be fabricated as module units, so assembling work and repair work for the pre-heater can be easily carried out, thereby improving productivity.

In addition, since the pre-heater of the present invention can be obtained by assembling module units with each other, the pre-heater of the present invention can be adapted for various kinds of vehicles by changing only a structure of the housings and the clip, without performing additional work.

While this invention has been described in connection with what is presently considered to be the most practical and preferred embodiment, it is to be understood that the invention is not limited to the disclosed embodiment and the drawings, but, on the contrary, it is intended to cover various modifications and variations within the scope of the appended claims.

## Claims

1. A heat rod assembly (100) for a pre-heater used in a vehicle, the heat rod assembly (100) comprising:
a channel type first heat rod (110);
an insulator (120) installed at a bottom portion of the first heat rod (110);
a positive terminal (130) fixedly installed on the insulator (120) lengthwise along the insulator (120);
a PTC device (140) coupled to the insulator (120) by interposing the positive terminal (130) therebetween; and
a second heat rod (150) opposite to the first heat rod (110) for covering an opening section of the first heat rod (110);
**characterized in that** the insulator (120) comprises:
a bottom recess (125), which extends lengthwise along the insulator (120) in order to receive the positive terminal (130) therein;
stepped recesses (124) formed at both sides of the bottom recess (125); and
insertion protrusions (122) formed in the stepped recesses (124), wherein a distance between the insertion protrusions (122) is identical to a length of the PTC device (140).

2. The heat rod assembly (100) as claimed in claim 1, wherein an upper edge section of the first heat rod (110) is inwardly bent such that the upper edge section covers an edge section of the second heat rod (150).

3. The heat rod assembly (100) as claimed in claim 2, wherein an inner width of the first heat rod (110) is identical to an outer width of the insulator (120).

4. The heat rod assembly (100) as claimed in claim 1, wherein the insulator (120) is provided at both longitudinal ends thereof with fixing protrusions (123), which are inserted into coupling holes formed in the positive terminal (130).

5. The heat rod assembly (100) as claimed in claim 1, wherein the PTC device (140) is positioned on the insulator (120) corresponding to openings (121) formed in the insulator (120) by interposing the positive terminal (130) between the PTC device (140) and the insulator (120).

6. A pre-heater (1000) for a vehicle, the pre-heater (1000) comprising:
a heat rod assembly (100) described in any one of claims 1 to 5;
a heat fin assembly (200) formed at both sides of the heat rod assembly (100) in parallel to each other;
a negative terminal (300) aligned in parallel to the heat fin assembly (200);
side frames (600, 900) coupled to both sides of a coupling structure consisting of the heat rod assembly (100), the heat fin assembly (200) and the negative terminal (300); and
housings (400, 800) for coupling the heat rod assembly (100), the heat fin assembly (200), the negative terminal (300), and the frames (600, 900) with each other at front and rear portions thereof.

7. The pre-heater (1000) as claimed in claim 6, further comprising a coupling unit (500) laterally provided over middle parts of the heat rod assembly (100), the heat fin assembly (200) and the negative terminal (300) in order to couple the heat rod assembly (100), the heat fin assembly (200) and the negative terminal (300) with each other.

8. The pre-heater (1000) as claimed in claim 7, wherein the coupling unit (500) includes a clip capable of coupling the heat rod assembly (100), the heat fin assembly (200) and the negative terminal (300) with the side frames (600, 900).

9. The pre-heater (1000) as claimed in claim 8, wherein the side frames (600, 900) have a channel structure, both ends of the clip are bent such that the both ends of the clip are locked with flanges formed in upper portions of the side frames (600, 900), and the housings (400, 800) have coupling slots (450, 850), respectively, for receiving end portions of the side frames (600, 900).

10. The pre-heater (1000) as claimed in claim 6, wherein the heat fin assembly (200) includes a plurality of corrugate fins (210), which are fixedly arranged lengthwise along a fin plate (220).

11. The pre-heater (1000) as claimed in claim 6, wherein the heat fin assembly (200) is coupled with the side frames (600, 900) by interposing a fin protecting plate (700) therebetween.

## Patentansprüche

1. Wärmestabanordnung (100) für einen Vorwärmer, der in einem Fahrzeug eingesetzt wird, wobei die Wärmestabanordnung (100) Folgendes umfasst:
einen ersten kanalartigen Wärmestab (110),
einen Isolator (120), der an einem unteren Bereich des ersten Wärmestabs (110) angebracht ist,
einen Pluspol (130), der längs entlang des Isolators (120) fest am Isolator (120) angebracht ist,
ein PTC-Element (140), das mit dem Isolator (120) verbunden ist, wobei der Pluspol (130) dazwischen angeordnet ist, und
einen zweiten Wärmestab (150) gegenüber dem ersten Wärmestab (110) zum Abdecken eines Öffnungsabschnitts des ersten Wärmestabs (110),
**dadurch gekennzeichnet, dass** der Isolator (120) Folgendes umfasst:
eine untere Vertiefung (125), die längs entlang des Isolators (120) verläuft, um den Pluspol (130) darin aufzunehmen,
abgestufte Vertiefungen (124), die an beiden Seiten der unteren Vertiefung (125) ausgebildet sind, und
Einsetzvorsprünge (122), die in den abgestuften Vertiefungen (124) ausgebildet sind, wobei der Abstand zwischen den Einsetzvorsprüngen (122) identisch mit der Länge des PTC-Elements (140) ist.

2. Wärmestabanordnung (100) nach Anspruch 1, wobei ein oberer Randabschnitt des ersten Wärmestabs (110) derart nach innen gebogen ist, dass der obere Randabschnitt einen Randabschnitt des zweiten Wärmestabs (150) bedeckt.

3. Wärmestabanordnung (100) nach Anspruch 2, wobei die innere Breite des ersten Wärmestabs (110) mit der äußeren Breite des Isolators (120) identisch ist.

4. Wärmestabanordnung (100) nach Anspruch 1, wobei der Isolator (120) an beiden Längsenden desselben mit Befestigungsvorsprüngen (123) versehen ist, die in Verbindungslöcher gesteckt werden, die im Pluspol (130) ausgebildet sind.

5. Wärmestabanordnung (100) nach Anspruch 1, wobei das PTC-Element (140) am Isolator (120) entsprechend den Öffnungen (121) platziert ist, die im Isolator (120) ausgebildet sind, wobei der Pluspol (130) zwischen dem PTC-Element (140) und dem Isolator (120) angeordnet ist.

6. Vorwärmer (1000) für ein Fahrzeug, wobei der Vorwärmer (1000) Folgendes umfasst:
eine Wärmestabanordnung (100), die in einem der Ansprüche 1 bis 5 beschrieben ist,
eine Wärmerippenanordnung (200), die auf beiden Seiten der Wärmestabanordnung (100) parallel zueinander ausgebildet ist,
einen Minuspol (300) der parallel nach der Wärmerippenanordnung (200) ausgerichtet ist,
Seitenteile (600, 900), die mit beiden Seiten einer Verbindungsstruktur verbunden sind, die aus der Wärmestabanordnung (100), der Wärmerippenanordnung (200) und dem Minuspol (300) besteht, und
Gehäuse (400, 800) zum Verbinden der Wärmestabanordnung (100), der Wärmerippenanordnung (200), des Minuspols (300) und der Teile (600, 900) miteinander am vorderen und hinteren Bereich derselben.

7. Vorwärmer (1000) nach Anspruch 6, weiterhin umfassend eine Verbindungseinheit (500), die seitlich über dem Mittelteil der Wärmestabanordnung (100), der Wärmerippenanordnung (200) und des Minuspols (300) vorgesehen ist, um die Wärmestabanordnung (100), die Wärmerippenanordnung (200) und den Minuspol (300) miteinander zu verbinden.

8. Vorwärmer (1000) nach Anspruch 7, wobei die Verbindungseinheit (500) eine Haltevorrichtung aufweist, mit der die Wärmestabanordnung (100), die Wärmerippenanordnung (200) und der Minuspol (300) mit den Seitenteilen (600, 900) verbunden werden können.

9. Vorwärmer (1000) nach Anspruch 8, wobei die Seitenteile (600, 900) eine Kanalstruktur aufweisen, beide Enden der Haltevorrichtung derart gebogen sind, dass beide Enden der Haltevorrichtung mit Bünden gesichert sind, die in oberen Bereichen der Seitenteile (600, 900) ausgebildet sind, und die Gehäuse (400, 800) Verbindungsschlitze (450, 850) aufweisen, um die Endbereiche der jeweiligen Seitenteile (600, 900) aufzunehmen.

10. Vorwärmer (1000) nach Anspruch 6, wobei die Wärmerippenanordnung (200) eine Vielzahl von wellenförmigen Rippen (210) aufweist, die längs entlang einer Rippenplatte (220) fest angeordnet sind.

11. Vorwärmer (1000) nach Anspruch 6, wobei die Wärmerippenanordnung (200) mit den Seitenteilen (600, 900) verbunden ist, wobei eine Rippenschutzplatte (700) dazwischen angeordnet ist.

## Revendications

1. Ensemble à tige chauffante (100) pour un préchauffeur utilisé dans un véhicule, l'ensemble à tige chauffante (100) comprenant :
une première tige chauffante du type à canal (110) ;
un isolateur (120) installé au niveau d'une portion de base de la première tige chauffante (110) ;
une borne positive (130) installée fixement sur l'isolateur (120) dans le sens de la longueur le long de l'isolateur (120) ;
un dispositif CTP (140) couplé à l'isolateur (120) en interposant la borne positive (130) entre ceux-ci ; et
une seconde tige chauffante (150) opposée à la première tige chauffante (110) pour couvrir une section d'ouverture de la première tige chauffante (110) ;
**caractérisé en ce que** l'isolateur (120) comprend :
une cavité de base (125) qui s'étend dans le sens de la longueur le long de l'isolateur (120) afin de recevoir dans celle-ci la borne positive (130) ;
des cavités en gradins (124) formées des deux côtés de la cavité de base (125) ; et
des protubérances d'insertion (122) formées dans les cavités en gradins (124), dans lequel une distance entre les protubérances d'insertion (122) est identique à une longueur du dispositif CTP (140).

2. Ensemble à tige chauffante (100) selon la revendication 1, dans lequel une section de bord supérieure de la première tige chauffante (110) est recourbée vers l'intérieur de sorte que la section de bord supérieure couvre une section de bord de la seconde tige chauffante (150).

3. Ensemble à tige chauffante (100) selon la revendication 2, dans lequel une largeur intérieure de la première tige chauffante (110) est identique à une largeur extérieure de l'isolateur (120).

4. Ensemble à tige chauffante (100) selon la revendication 1, dans lequel l'isolateur (120) est pourvu aux deux extrémités longitudinales de celui-ci de protubérances de fixation (123), qui sont insérées dans des trous de couplage formés dans la borne positive (130).

5. Ensemble à tige chauffante (100) selon la revendication 1, dans lequel le dispositif CTP (140) est positionné sur l'isolateur (120) correspondant aux ouvertures (121) formées dans l'isolateur (120) en interposant la borne positive (130) entre le dispositif CTP (140) et l'isolateur (120)

6. Préchauffeur (1000) pour un véhicule, le préchauffeur (1000) comprenant :
un ensemble à tige chauffante (100) décrit dans une quelconque des revendications 1 à 5;
un ensemble d'ailette thermique (200) formé aux deux extrémités de l'ensemble à tige chauffante (100) en parallèle l'un à l'autre ;
une borne négative (300) alignée en parallèle à l'ensemble d'ailette thermique (200) ;
des armatures latérales (600,900) couplées aux deux côtés d'une structure de couplage constituée de l'ensemble à tige chauffante (100), l'ensemble d'ailette thermique (200) et la borne négative (300) ; et
des logements (400,800) pour coupler l'ensemble à tige chauffante (100), l'ensemble d'ailette thermique (200), la borne négative (300) et les armatures (600,900) les uns aux autres au niveau de portions frontales et arrières de ceux-ci.

7. Préchauffeur (1000) selon la revendication 6, comprenant en outre une unité de couplage (500) prévue latéralement au dessus de parties centrales de l'ensemble à tige chauffante (100), l'ensemble d'ailette thermique (200) et la borne négative (300) afin de coupler l'ensemble à tige chauffante (100), l'ensemble d'ailette thermique (200) et la borne négative (300) les uns aux autres.

8. Préchauffeur (1000) selon la revendication 7, dans lequel l'unité de couplage (500) inclut une attache capable de coupler l'ensemble à tige chauffante (100), l'ensemble d'ailette thermique (200) et la borne négative (300) aux armatures latérales (600,900).

9. Préchauffeur (1000) selon la revendication 8, dans lequel les armatures latérales (600,900) ont une structure de canal, les deux extrémités de l'attache sont recourbées de sorte que les deux extrémités de l'attache soient verrouillées avec des brides formées dans des portions supérieures des armatures latérales (600,900) et les logements (400,800) ont des fentes de couplage (450,850), respectivement, pour recevoir des portions d'extrémité des armatures latérales (600,900).

10. Préchauffeur (1000) selon la revendication 6, dans lequel l'ensemble d'ailette thermique (200) inclut une pluralité d'ailettes ondulées (210), qui sont arrangées fixement dans le sens de la longueur autour d'une plaque d'ailette (220).

11. Préchauffeur (1000) selon la revendication 6, dans lequel l'ensemble d'ailette thermique (200) est couplé aux armatures latérales (600,900) en interposant une plaque de protection d'ailette (700) entre ceux-ci.
